# EUROPEAN PATENT SPECIFICATION

(11) **EP 4 303 576 B1**
(45) Date of publication and mention of the grant of the patent: **10.09.2025**
(21) Application number: 21929199.4
(22) Date of filing: 08.12.2021
(51) Int. Cl.: G01N 33/49, G01N 35/00, G01N 27/416

(54) **ELECTROLYTE MEASUREMENT DEVICE, AND METHOD FOR DETERMINING ABNORMALITY IN ELECTROLYTE CONCENTRATION MEASUREMENT UNIT**
ELEKTROLYTMESSVORRICHTUNG UND VERFAHREN ZUR BESTIMMUNG EINER ANOMALIE IN EINER ELEKTROLYTKONZENTRATIONSMESSEINHEIT
DISPOSITIF DE MESURE D'ÉLECTROLYTES ET PROCÉDÉ DE DÉTERMINATION D'ANOMALIES DANS UNE UNITÉ DE MESURE DE CONCENTRATIONS D'ÉLECTROLYTES

(30) Priority: 02.03.2021 JP 2021032568
(43) Date of publication of application: 10.01.2024
(73) Proprietor: HITACHI HIGH-TECH CORPORATION, Tokyo 105-6409 (JP)
(72) Inventor: FURUYA Miki, Tokyo 105-6409 (JP); USHIKU Emiko, Tokyo 105-6409 (JP)
(74) Representative: Strehl & Partner mbB
(86) International application number: PCT/JP2021/045035
(87) International publication number: WO 2022/185641

(56) References cited:
- WO-A1-2019/163281
- JP-A- 2012 042 359
- JP-A- 2012 255 812
- JP-A- 2014 041 060
- JP-A- 2015 125 000
- JP-A- 2016 218 067
- JP-A- 2020 012 823
- JP-A- 2020 012 823
- JP-A- 2020 041 968

## Description

### Technical Field

The present invention relates to an electrolyte measurement device, and more particularly, to an electrolyte measurement device for performing a measurement of an electrolyte in a sample such as blood and urine using a plurality of ion-selective electrodes, and a method for determining an abnormality in an electrolyte concentration measurement unit.

### Background Art

As an example of an electrolyte analyzer that can improve reliability while preventing a decrease in measurement quickness, PTL 1 describes an electrolyte analyzer that measures a concentration of specific ions in a sample using an ion-selective electrode, in which ion concentrations of an internal standard solution adjusted to have a known ion concentration in advance are measured before and after the measurement of the sample, and a measurement result of the sample is determined to be abnormal in the case in which a difference between measurement results of the ion concentrations of the internal standard solution before and after the measurement of the sample exceeds a predetermined reference value.

### Citation List

### Patent Literature

PTL 1: JP2016-188872A
JP2012042359 A discloses an automatic analyzer that analyzes a component contained in a test sample collected from a subject.

### Summary of Invention

### Technical Problem

The electrolyte measurement device is a device that measures a concentration of specific ions in a sample such as blood and urine. As the electrolyte measurement device, devices having various configurations are known. In particular, a configuration for measuring an ion concentration using an ion-selective electrode is widely used in the field of clinical tests.

In an electrolyte measurement device using an ion-selective electrode, a standard solution having a known ion concentration is measured to create a calibration curve in advance. Next, a difference in electromotive force between the internal standard solution and the sample is determined by the ion-selective electrode, and a concentration of ions in the sample is measured using the calibration curve created in advance.

Such an electrolyte measurement device is described in, for example, PTL 1. In addition, PTL 1 discloses an electrolyte measurement device that measures an ion concentration of an internal standard solution, which is adjusted to have a known ion concentration in advance, before and after measurement of a sample, and determines that a measurement result of the sample is abnormal in the case in which a difference between measurement results of the ion concentrations of the internal standard solutions before and after the measurement of the sample exceeds a predetermined reference value.

In a clinical test, an electrolyte measurement device in which an electrolyte measurement unit and a colorimetric analysis unit are combined is used to perform a qualitative or quantitative analysis of components contained in a biological sample.

In such an electrolyte measurement device, according to characteristics of a measurement principle, the sample dispensing is performed in an order of the electrolyte measurement first and the colorimetric analysis next. The measurement items for one sample generally have a larger number of colorimetry items than electrolyte items, and when the time is increased until the next sample is dispensed after the electrolyte measurement, the electromotive force of the ion-selective electrode when the measurement is restarted may become unstable due to a change in environmental temperature, a change in an electrode film, a change in conditions of electrical noise, or the like.

Here, in the above-described PTL 1, the abnormality is determined based on the difference between measurement results of the ion concentrations of the internal standard solution before and after the measurement of the sample, and the determination result is displayed after the measurement of the sample. Therefore, when the abnormality determination is made, the sample needs to be measured again from here.

In the field of clinical tests, higher reliability is required in addition to measurement quickness. The electrolyte measurement is generally performed while a liquid is flowing using a flow-through electrode, and the measurement is performed in an instant in milliseconds. In the electrolyte measurement, a component concentration is determined based on the electromotive force of the ion-selective electrode. Therefore, monitoring whether the electromotive force of the ion-selective electrode is stable is an index for an accurate measurement.

In the electrolyte measurement device in the related art described above, it has become clear that there is no method for checking the stability of the electromotive force of the ion-selective electrode during standby time other than the time of the sample measurement, and further improvement is required.

An object of the invention is to provide an electrolyte analyzer and a method for determining an abnormality in an electrolyte concentration measurement unit, which can sense an unstable state early.

### Solution to Problem

The invention includes a plurality of aspects for solving the above problems, and an example thereof includes: an electrolyte concentration measurement unit including an ion-selective electrode to be supplied with a sample or an internal standard solution, a reference electrode serving as a reference of a potential, and a measurement unit configured to measure a potential difference between the ion-selective electrode and the reference electrode; a second measurement unit configured to perform a measurement of a measurement item different from that of the electrolyte concentration measurement unit; a dispensing unit configured to perform dispensing of the sample into the electrolyte concentration measurement unit or the second measurement unit; and a control unit configured to control an operation of each device, in which, when the sample is dispensed into the second measurement unit by the dispensing unit or when the sample is measured by the second measurement unit, the control unit measures a potential in a state in which the ion-selective electrode is filled with the internal standard solution, and determines presence or absence of an abnormality in the electrolyte concentration measurement unit based on measurement data.

### Advantageous Effects of Invention

According to the invention, an unstable state can be detected early. The problems, configurations, and effects other than those described above will become apparent in the following description of embodiments.

### Brief Description of Drawings

[FIG. 1] FIG. 1 is a schematic configuration diagram showing an example of an overall configuration of an electrolyte measurement device according to an embodiment of the invention.
[FIG. 2] is a schematic configuration diagram showing an example of configurations of an electrolyte measurement unit of the electrolyte measurement device according to the embodiment of the invention and a periphery thereof.
[FIG. 3] FIG. 3 is a flowchart showing an operation of the electrolyte measurement device according to the embodiment of the invention.
[FIG. 4] FIG. 4 is a flowchart showing processing contents of electromotive force collection and analysis for an internal standard solution in a period A in FIG. 3.
[FIG. 5] FIG. 5 is a flowchart showing processing contents of electromotive force collection and analysis for an internal standard solution in a period B in FIG. 3.
[FIG. 6] FIG. 6 is a view showing an example of a screen display of an electromotive force monitor during standby time in the electrolyte measurement device according to the embodiment of the invention.
[FIG. 7] FIG. 7 is a view showing an example of a screen display of an electromotive force monitoring result during the standby time in the electrolyte measurement device according to the embodiment of the invention.

### Description of Embodiments

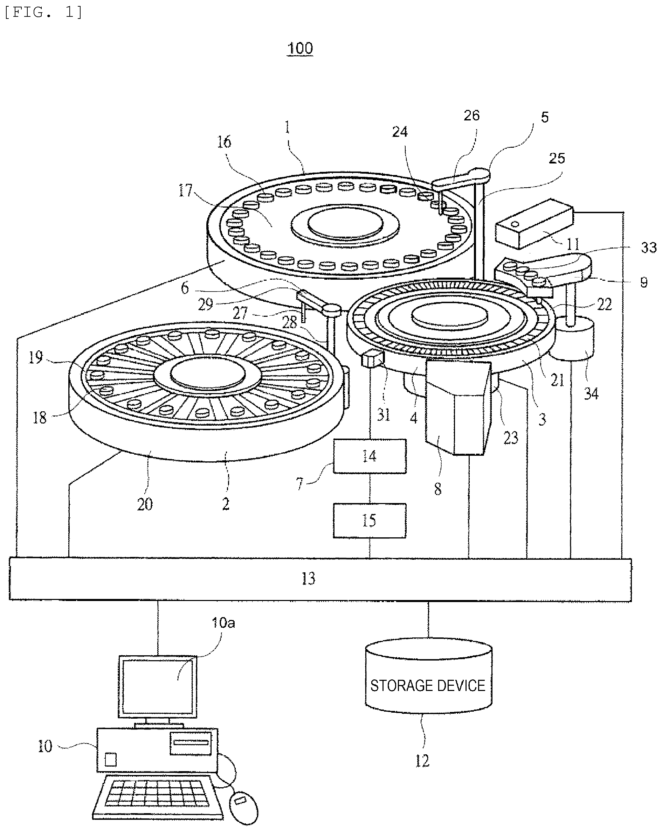

An embodiment of an electrolyte measurement device and a method for determining an abnormality in an electrolyte concentration measurement unit according to the invention will be described with reference to FIGS. 1 to 7. In the drawings used in this specification, the same or corresponding components are denoted by the same or similar reference signs, and repeated description of these components may be omitted.

### <<Overall Configuration and Operation of Electrolyte Measurement Device>>

First, the overall configuration and operation of an electrolyte measurement device according to the present embodiment will be described with reference to FIG. 1. FIG. 1 is a schematic configuration diagram showing an example of the overall configuration of the electrolyte measurement device. Here, a biochemical electrolyte measurement device will be described as an example.

An electrolyte measurement device 100 shown in FIG. 1 is a device capable of measuring an electrolyte item and a colorimetry item, and includes a sample disk 1 on which a plurality of sample containers 16 are placed, a reagent disk 2 on which a plurality of reagent bottles 18 are placed, a reaction disk 3 on which a plurality of reaction containers 21 are placed, a reaction tank 4, a sampling mechanism 5 disposed in a vicinity of the sample disk 1 and the reaction disk 3, a reagent dispensing mechanism 6 disposed in a vicinity of the reagent disk 2 and the reaction disk 3, a stirring mechanism 7, a photometry mechanism 8, a cleaning mechanism 9, and an electrolyte measurement unit 11 that are disposed in a vicinity of the reaction disk 3, a computer (PC) 10, a storage device 12, a control unit 13, a piezoelectric element driver 14, a stirring mechanism controller 15, a circular sample disk 17, a circular reagent disk 19, a refrigerator 20, the reaction containers 21, reaction container holders 22, a drive mechanism 23, a sample probe 24, a sample probe supporting shaft 25, a sample probe arm 26, a reagent probe 27, a reagent probe supporting shaft 28, a reagent probe arm 29, a fixing unit 31, a nozzle 33, a vertical drive mechanism 34, and the like.

In the sample disk 1, the plurality of sample containers 16 each containing a sample to be analyzed are placed side by side on a circumference of the circular sample disk 17.

The sampling mechanism 5 is disposed in the vicinity of the sample disk 1. In the sampling mechanism 5, the sample probe 24 for aspirating a sample from a corresponding sample container 16 and discharging the sample to a corresponding reaction container 21 or the electrolyte measurement unit 11 is attached to the sample probe arm 26 fixed to the sample probe supporting shaft 25.

In the reagent disk 2, the plurality of reagent bottles 18 for storing reagents are placed side by side on a circumference of the circular reagent disk 19. The refrigerator 20 is disposed on the reagent disk 2.

The reagent dispensing mechanism 6 is disposed in the vicinity of the reagent disk 2. In the reagent dispensing mechanism 6, the reagent probe 27 for aspirating a reagent from a corresponding reagent bottle 18 and discharging the reagent to a corresponding reaction container 21 is attached to the reagent probe arm 29 fixed to the reagent probe supporting shaft 28.

In the reaction disk 3, the plurality of reaction container holders 22 that hold the plurality of reaction containers 21 are placed side by side on a circumference. The reaction tank 4 is disposed on the reaction disk 3. The reaction disk 3 is further intermittently rotatable by the drive mechanism 23. In the vicinity of the reaction disk 3, the stirring mechanism 7, the photometry mechanism 8, the cleaning mechanism 9, the electrolyte measurement unit 11, and the like are disposed.

The stirring mechanism 7 is a mechanism for stirring contents (a sample and a reagent) in the reaction container 21, and includes the piezoelectric element driver 14, the stirring mechanism controller 15, and the like.

The photometry mechanism 8 is a mechanism for measuring transmitted light transmitted through the contents in the reaction container 21 and scattered light scattered by the contents, and includes a light source, a detector (both are omitted for convenience of illustration), and the like. The cleaning mechanism 9 is a mechanism for cleaning the inside of the reaction container 21, and includes the nozzle 33, the vertical drive mechanism 34, and the like. The photometry mechanism 8 is a colorimetric measurement unit, and serves as a second measurement unit for performing a measurement of measurement items different from those of the electrolyte measurement unit 11 in the present embodiment.

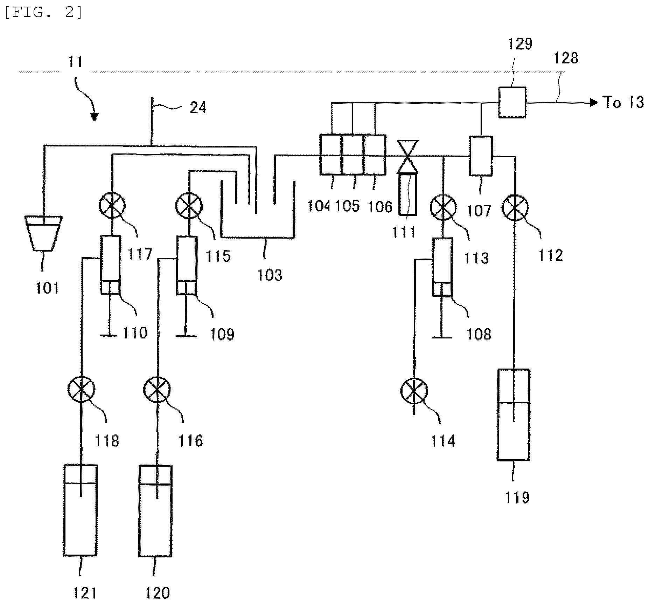

The electrolyte measurement unit 11 is a device for performing a measurement of an electrolyte in a sample, and includes an ion-selective electrode, a reference electrode, and the like described later in FIG. 2.

The sample disk 1, the reagent disk 2, the reaction disk 3, the sampling mechanism 5, the reagent dispensing mechanism 6, the stirring mechanism 7, the photometry mechanism 8, the cleaning mechanism 9, and the electrolyte measurement unit 11 are connected to the control unit 13, and further connected to the computer 10 to control each operation. The storage device 12 is connected to the control unit 13.

The computer 10 includes, for example, a body having a calculation processing function, a storage function, and the like, an input unit such as a keyboard and a mouse, and a display unit 10a such as a liquid crystal display and a CRT, and sets information on a measurement sample, registration of measurement items, analysis parameters, and the like.

The storage device 12 stores and holds analysis parameters, the number of times each reagent bottle can be analyzed, the maximum number of times each reagent bottle can be analyzed, a calibration result, an analysis result, and the like, a determination process of evaluating a dispensing operation, data necessary for determination of holding in advance, and the like. Note that the information stored and held in the storage device 12 may be stored in a storage medium attached to the computer 10, or may be present alone as an individual storage database like the storage device 12.

The control unit 13 is a subject for executing an analysis operation by controlling an operation of each device based on the registration of the measurement items, the analysis parameters, and the like received from the computer 10 as described above.

In the present embodiment, when the sample for analysis with the photometry mechanism 8 is dispensed by the sampling mechanism 5 or when the sample is measured by the photometry mechanism 8, the control unit 13 measures a potential in a state in which ion-selective electrodes 104, 105, and 106 are filled with an internal standard solution, and determines the presence or absence of the abnormality in the electrolyte measurement unit 11 based on the measurement data. Details thereof will be described later.

At this time, the control unit 13 according to the present embodiment can determine the presence or absence of an abnormality in the electrolyte measurement unit 11 based on measurement data obtained by measuring potentials twice or more consecutively in a state in which the ion-selective electrodes 104, 105, and 106 are filled with the internal standard solution, determine an abnormality based on a state of the potentials each measured for a respective one of the ion-selective electrodes 104, 105, and 106, preferably based on a combination of slopes of temporal changes of the measurement potentials, identify a cause of the abnormality based on whether the measured potentials are out of a reference range in all the ion-selective electrodes 104, 105, and 106, or determine an abnormality based on the slopes of the temporal changes of the measurement potentials when the measurement potentials of all the ion-selective electrodes 104, 105, and 106 are within the reference range. Details thereof will be described later.

In the electrolyte measurement device 100 implemented as described above, the colorimetric analysis of a sample is performed in the order of sampling, reagent dispensing, stirring, photometry, cleaning of the reaction container, and data processing such as concentration conversion as follows.

The sample disk 1, the reagent disk 2, the reaction disk 3, the sampling mechanism 5, the reagent dispensing mechanism 6, the stirring mechanism 7, the photometry mechanism 8, the cleaning mechanism 9, and the electrolyte measurement unit 11 are controlled by the control unit 13 via the computer 10.

First, the plurality of sample containers 16 each containing a sample to be analyzed are disposed on the circumference side by side on the sample disk 1, and a sample container 16 is moved to a position below the sample probe 24 of the sampling mechanism 5 according to an order of the samples to be analyzed. The sample in the sample container 16 is first dispensed into the electrolyte measurement unit 11 and then dispensed into the reaction container 21 on the reaction disk 3 in this order in a predetermined amount by a sample pump (not shown) coupled to the sampling mechanism 5.

Further, the reaction container 21 into which the sample is dispensed moves to a first-reagent addition position in the reaction tank 4. A reagent aspirated from the reagent bottle 18 on the reagent disk 2 is added in a predetermined amount to the moved reaction container 21 by a reagent pump (not shown) coupled to the reagent probe 27 of the reagent dispensing mechanism 6. The reaction container 21 to which the first reagent is added moves to a position of the stirring mechanism 7, and the first stirring is performed. Such a series of operations that are adding and stirring the reagent is performed for, for example, the first reagent to a fourth reagent.

Subsequently, the reaction container 21 in which the contents are stirred passes through a light beam emitted from the light source in the photometry mechanism 8, and the absorbance at this time is detected by a multi-wavelength spectrophotometer. A signal of the detected absorbance is input to the control unit 13 and is converted into the concentration of the sample. In addition, the control unit 13 simultaneously determines an abnormality based on the absorbance.

The electrolyte measurement of the sample is performed by dispensing the sample into the electrolyte measurement unit 11 by the sampling mechanism 5. A sampling mechanism may be separately provided for dispensing a sample into the electrolyte measurement unit 11 for the electrolyte measurement.

Then, the data obtained by concentration conversion is stored in the storage device 12 and displayed on a display device attached to the computer 10. The reaction container 21 for which the photometry is ended moves to a position of the cleaning mechanism 9, is cleaned, and is provided for the next analysis.

As described above, in the electrolyte measurement device according to the present embodiment, the sampling, the reagent dispensing, the stirring, the photometry, the cleaning of the reaction container, and data processing such as concentration conversion is performed in this order, and thus, the colorimetric analysis of the sample can be performed.

FIG. 1 shows a case in which a measurement unit (second measurement unit) provided together with the electrolyte measurement unit 11 is the photometry mechanism 8 for measuring a colorimetry item, and the measurement unit provided together with the electrolyte measurement unit 11 is not limited to the use of the colorimetry item, and a measurement unit for measuring another item, for example, an immune item may be provided.

The electrolyte measurement device 100 is not limited to a single analysis module configuration as shown in FIG. 1, and a configuration can be used in which two or more analysis modules capable of measuring various identical or different analysis items or pretreatment modules for performing pretreatment may be connected by a transfer device.

### <<Configuration and Operation of Electrolyte Measurement Device>>

Next, a configuration and an operation of a part including the electrolyte measurement unit 11 of the above-described electrolyte measurement device 100 and a mechanism unit such as a solenoid valve and a syringe around the electrolyte measurement unit 11 will be described with reference to FIG. 2. FIG. 2 is a schematic configuration diagram showing an example of a configuration of the electrolyte measurement unit according to the present embodiment or a periphery thereof.

In FIG. 2, the electrolyte measurement unit 11 is not particularly limited, and includes an electrolyte measurement mechanism including the ion-selective electrodes 104, 105, and 106, a control unit (control device) connected to the electrolyte measurement unit, and a display unit (display device) .

The electrolyte measurement mechanism is not particularly limited, and includes, as shown in FIG. 2, a sample container 101, the sample probe 24, a dilution tank 103, the ion-selective electrodes 104, 105, and 106, a reference electrode 107, a sipper syringe 108, an internal standard solution syringe 109, a diluent syringe 110, a pinch valve 111, a reference electrode two-way solenoid valve 112, a sipper syringe aspiration two-way solenoid valve 113, a waste liquid discharge two-way solenoid valve 114, and a voltmeter 129 that measures a potential difference between the ion-selective electrodes 104, 105, and 106 and the reference electrode 107.

The electrolyte measurement unit 11 is further provided with an internal standard solution discharge two-way solenoid valve 115, an internal standard solution aspiration two-way solenoid valve 116, a diluent discharge two-way solenoid valve 117, and a diluent aspiration two-way solenoid valve 118.

In this embodiment, the ion-selective electrode 104 is a Na (sodium)-ion-selective electrode, the ion-selective electrode 105 is a K (potassium)-ion-selective electrode, and the ion-selective electrode 106 is a Cl (base)-ion-selective electrode.

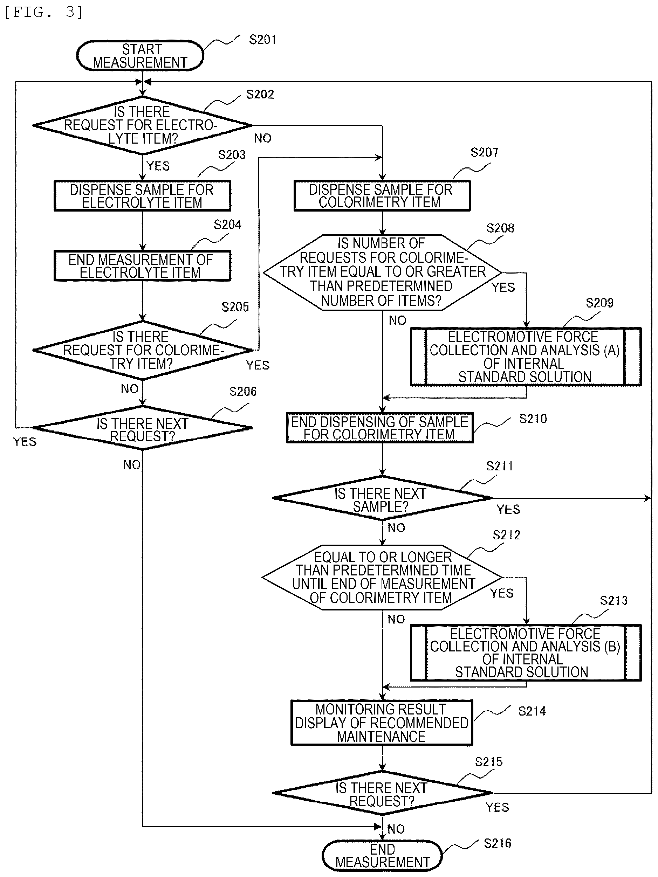

The storage unit constituting the electrolyte measurement unit 11 corresponds to a part of the storage device 12 (or a storage area in the computer 10 or the attached storage medium) shown in FIG. 1, and the control unit corresponds to a part of the control unit 13 (or the computer 10) shown in FIG. 1. The control unit 13 controls a flow of collecting an ion-selective electrode electromotive force, an electromotive force analysis processing flow, and the like, which will be described later with reference to FIGS. 3 to 5.

The operation of the electrolyte measurement unit 11 implemented as described above will be described with reference to FIG. 2. The operation of the electrolyte measurement unit 11 is controlled by the control unit 13 via the computer 10.

In FIG. 2, a sample in the sample container 101 is aspirated by a set amount and discharged to the dilution tank 103 by the sample probe 24. A diluent in a diluent bottle 121 is discharged to the dilution tank 103 by operations of the diluent aspiration two-way solenoid valve 118, the diluent syringe 110, and the diluent discharge two-way solenoid valve 117. Accordingly, the sample discharged from the sample container 101 to the dilution tank 103 is diluted with the diluent.

Next, in a state in which the pinch valve 111 is closed, the reference electrode solution in a reference electrode solution bottle 119 is aspirated to the reference electrode 107 via the reference electrode two-way solenoid valve 112 by operations of the sipper syringe 108 and the sipper syringe aspiration two-way solenoid valve 113.

Next, the sample diluted in the dilution tank 103 is aspirated to the ion-selective electrodes 104, 105, and 106 by the sipper syringe 108, the sipper syringe aspiration two-way solenoid valve 113, and the pinch valve 111.

When the diluted sample comes into contact with each of the ion-selective electrodes 104, 105, and 106, an electromotive force corresponding to each ion concentration is generated in a respective one of the ion-selective electrodes 104, 105, and 106. For example, the ion-selective electrode 104 generates an electromotive force corresponding to a concentration of Na ions.

In this embodiment, a voltage at the reference electrode 107 is used as a reference voltage, and the electromotive force generated in each of the ion-selective electrodes 104, 105, and 106 is measured by the voltmeter 129.

Further, the internal standard solution in an internal standard solution bottle 120 is discharged to the dilution tank 103 by operations of the internal standard solution aspiration two-way solenoid valve 116, the internal standard solution syringe 109, and the internal standard solution discharge two-way solenoid valve 115. In this case, the diluted sample and the internal standard solution are controlled to be alternately transferred to the ion-selective electrodes 104, 105, and 106. When the diluted sample and the internal standard solution alternately come into contact with the ion-selective electrodes 104, 105, and 106, an electromotive force based on the diluted sample and an electromotive force based on the internal standard solution are generated in each of the ion-selective electrodes 104, 105, and 106. The generated electromotive force is measured using the voltage at the reference electrode 107 as a reference voltage.

The sample and the internal standard solution after the measurement are discharged from a waste solution flow path to the outside of the electrolyte measurement unit 11 by opening the waste liquid discharge two-way solenoid valve 114. Thereafter, the internal standard solution is newly transferred to the ion-selective electrodes 104, 105, and 106, and a time until an internal standard solution for the next sample measurement is transferred is defined as a standby state.

The electromotive force measured by the voltmeter 129 is supplied from each of the ion-selective electrodes 104, 105, and 106 to the control unit 13 via a signal wiring 128. The electromotive force (measured electromotive force) supplied via the signal wiring 128 is supplied to an amplifier and amplified.

The amplified electromotive force is converted into a digital signal by an A/D converter, and the digital signal is sent to the computer 10.

In FIG. 1, the amplifier and the A/D converter in the control unit 13 are omitted.

A calibration curve is created using a standard solution whose concentration is known in advance. The created calibration curve is stored in advance in the storage device 12 using an input device such as the keyboard of the computer 10. The computer 10 performs calculation on the digital signal supplied from the A/D converter based on the calibration curve stored in advance in the storage device 12. That is, the computer 10 performs concentration calculation on an electrolyte in the measured sample based on the calibration curve, and displays a result of the concentration calculation on the display unit 10a such as a monitor of the computer 10.

Next, an operation of the electrolyte measurement device according to the present embodiment will be described with reference to FIG. 3. FIG. 3 is a flowchart showing the operation of the electrolyte measurement device according to the present embodiment. The calibration curve is created in advance.

When a measurement performed by the electrolyte measurement device 100 is started (step S201), the control unit 13 first determines whether there is an analysis request for an electrolyte item for a first sample (step S202). When it is determined that there is a request for the electrolyte item, the processing proceeds to step S203, and dispensing of the sample for the electrolyte item is performed (step S203). In contrast, when it is determined that there is no request for the electrolyte item, the processing proceeds to step S207.

After the dispensing processing of the sample for the electrolyte item in step S203 is ended (step S204), the control unit 13 determines whether there is an analysis request for a colorimetry item for the sample (step S205). When it is determined that there is a request for the colorimetry item, the processing proceeds to step S207, and when it is determined that there is no request for the colorimetry item, the processing proceeds to step S206.

When it is determined that there is no request for the colorimetry item, the control unit 13 then determines whether there is a measurement request for the next sample at this time point (step S206). In step S206, the measurement item is not determined. When it is determined that there is a request, the processing returns to the determination in step S202, and when it is determined that there is no request, the measurement ends in step S216.

When it is determined in step S205 that there is a request for the colorimetry item, or when it is determined in step S202 that there is no request for the electrolyte item, the control unit 13 starts dispensing a sample for the colorimetry item (step S207).

Thereafter, the control unit 13 determines whether there are requests among which the number of requests for the colorimetry item is equal to or greater than a predetermined number of items for which electromotive force points necessary for the determination can be collected within the time for dispensing the sample for the colorimetry item set in advance before the start of the measurement (step S208). The predetermined number of items can be, for example, five or more, and can be appropriately changed according to the device configuration and is not limited.

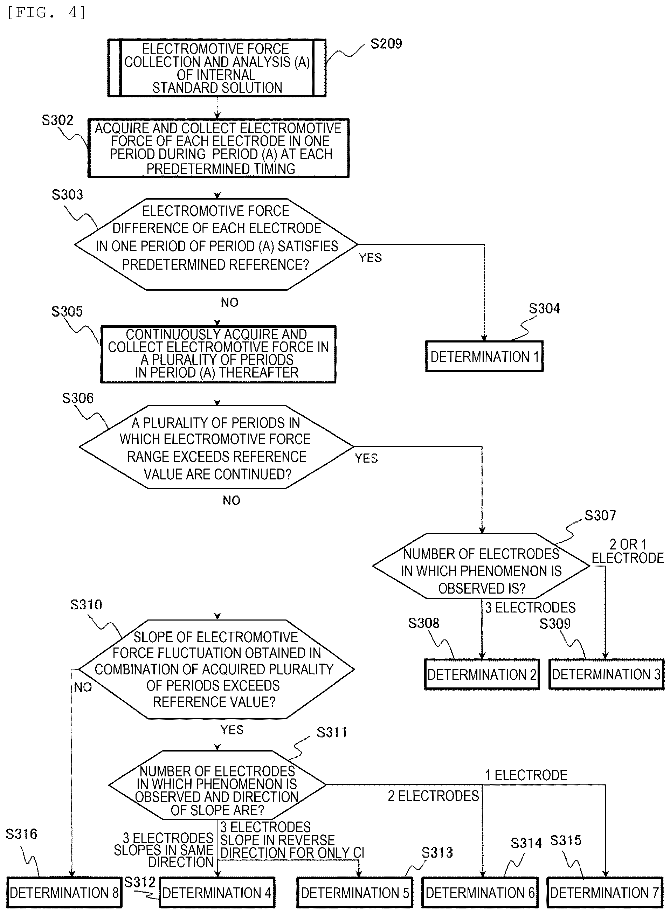

When it is determined that there are requests the number of which is equal to or greater than the number of items, the electromotive force collection and analysis of the internal standard solution in a period A are performed in each of the ion-selective electrodes 104, 105, and 106 (step S209). Details thereof will be described later with reference to FIG. 4. In contrast, when it is determined that there are no requests the number of which is equal to or greater than the number of items, the processing proceeds to step S210, and dispensing of the sample necessary for all items is appropriately completed (step S210).

The number of items for which the electromotive force points necessary for the determination can be collected within the time for dispensing the sample for the colorimetry item is set in advance, and in consideration of the operation of each mechanism such as the photometry mechanism 8 necessary for the analysis of the colorimetry item of the electrolyte measurement device 100, the setting of the points and the collection interval at which the electromotive force can be acquired at a timing with less noise is different depending on the machine type or required accuracy.

The "period A" in step S209 refers to a period of time from the start of the standby state of the electrolyte measurement device 100 after the end of the electrolyte measurement of the sample to a time point when a new internal standard solution is transferred to the ion-selective electrodes 104, 105, and 106 for the next sample to be continuously measured after the end of the dispensing of all the samples for the colorimetry item in step S210. In the case in which there are a large number of colorimetry items in the sample group requested to be continuously measured and there are a plurality of samples, collection can be performed in a plurality of continuous periods A.

Next, the control unit 13 determines whether there is a request for the next sample to be continuously measured at this time point (step S211). In step S211, the measurement item is not determined either. When it is determined that there is a request, the processing returns to the determination in step S202, and when it is determined that there is no request, the processing proceeds to step S212.

Next, the control unit 13 determines whether there is a predetermined time during which the electromotive force points necessary for the determination can be collected before the end of the measurement of the colorimetry item (step S212). The predetermined time can be, for example, "30 seconds until the end of the measurement of the colorimetry item", and this item can also be appropriately changed according to the device configuration and is not limited.

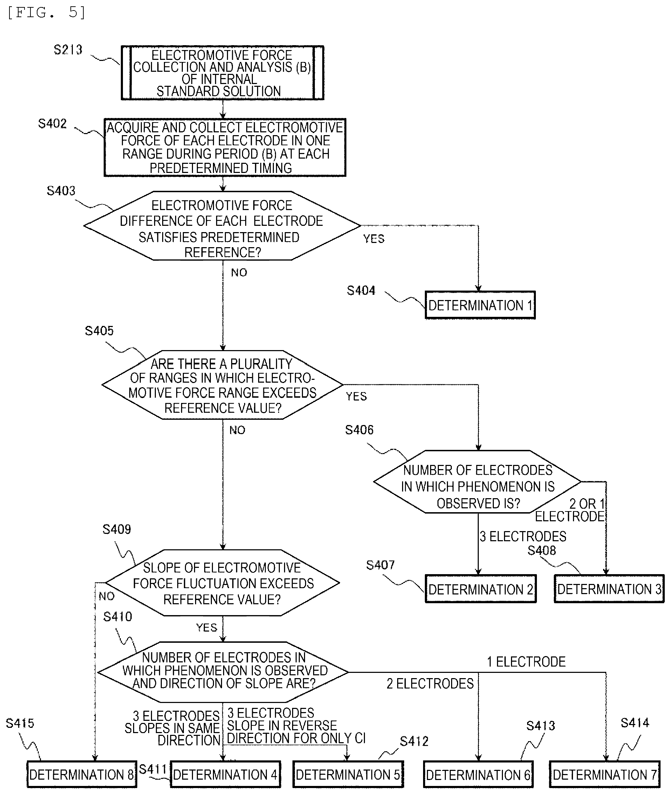

When it is determined that there is a period of time during which collection is enabled, the electromotive force collection and analysis of the internal standard solution in a period B in step S213 are performed in each of the ion-selective electrodes 104, 105, and 106 (step S213). Details thereof will be described later with reference to FIG. 5. In contrast, when it is determined that there is no time during which collection is enabled, the processing proceeds to step S214.

Note that the time during which the electromotive force points necessary for the determination can be collected before the end of the measurement by the colorimetric analysis unit is set differently for the machine type or required accuracy, as in step S207. The "period B" in step S213 refers to a period of time from the start of the standby state of the electrolyte measurement device 100 after the end of the electrolyte measurement for the last sample in the sample group for which the measurement is requested at one time to the start of the ending operation of the electrolyte measurement device 100 after the end of the colorimetric analysis, or to a time point when the next sample group is requested before the ending operation and a new internal standard solution is transferred to the ion-selective electrodes 104, 105, and 106 for the first sample.

The results of the collection and analysis in step S209 or step S213 are stored in the storage device 12.

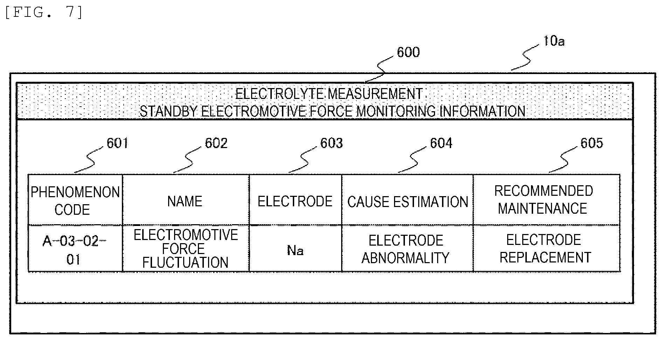

Thereafter, the control unit 13 displays the results measured and collected in step S209 or step S213 on the display unit 10a of the computer 10 as a standby electromotive force monitoring information screen 600 (FIG. 7) (step S214).

It is important to display a screen display of the standby electromotive force monitoring information screen 600 shown in FIG. 7 at a timing when a user can check the screen display before starting a request for a new sample group, so that it is desirable to perform the determination at a time point when the number of points necessary for the determination is collected, and to display the screen display in step S209 and step S213.

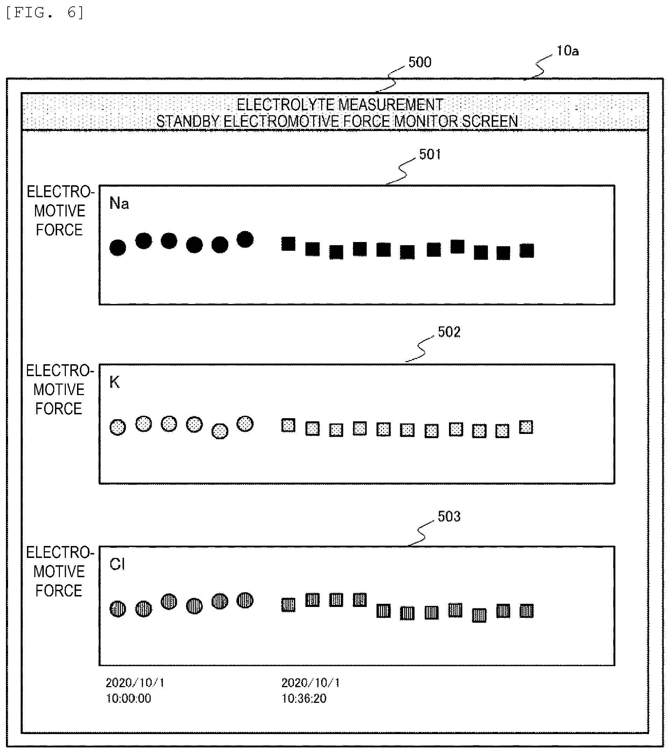

The user can check the electromotive force collected in step S209 or step S213 on a standby electromotive force monitor screen 500 (FIG. 6) on the display unit 10a of the computer 10 in real time.

The standby electromotive force monitor screen 500 shown in FIG. 6 can be viewed by the user at any timing, and it is desirable to display the standby electromotive force monitor screen 500 even when the device power is turned off, which is not limited to this case.

Thereafter, the control unit 13 determines whether there is a measurement request for the next sample at this time point (step S215). In step S215, the limitation of the measurement item is not determined either. When it is determined that there is a request, the processing returns to the determination in step S202, and when it is determined that there is no request, the measurement ends in step S216.

Next, the details of the electromotive force collection and analysis (A) for the internal standard solution in step S209 will be described with reference to FIG. 4. FIG. 4 is a flowchart showing the processing contents of the electromotive force collection and analysis of the internal standard solution in the period A.

First, the control unit 13 collects the electromotive force in one period during the period A at a predetermined timing (step S302). The predetermined period may be, for example, 4 seconds, and is not limited to this example.

Next, the control unit 13 determines whether the electromotive force difference of each of the ion-selective electrodes 104, 105, and 106 in one period of the period A satisfies, as an electromotive force fluctuation, a predetermined reference set in advance as a normal range (step S303). The predetermined reference can be, for example, whether the electromotive force difference is within a range of front and rear numerical values ±0.2 [mV], and may be changed appropriately.

When it is determined in step S303 that the predetermined reference is satisfied, Determination 1 is made (step S304). Determination 1 in step S304 is a determination indicating that there is no abnormality.

In contrast, when it is determined in step S303 that the reference value is not satisfied, the control unit 13 continuously collects the electromotive force of each of the ion-selective electrodes 104, 105, and 106 in a plurality of periods in the next period A (step S305).

Thereafter, the control unit 13 determines whether to continue, based on the information collected in step S305, a plurality of periods in which an electromotive force range exceeds the reference value (step S306). For example, it is determined whether the range of the electromotive force exceeds a reference value set in advance for determining noise or an abnormal spike. When it is determined that the range of the electromotive force exceeds the reference value set in advance for determining noise or an abnormal spike, the processing proceeds to step S307, and when it is determined that the range of the electromotive force is equal to or smaller than the reference value, the processing proceeds to step S310.

Note that the determination is not limited to the expectation of the determination based on whether to continue a plurality of periods, and it is also possible to make a determination based on whether there is a period in which the reference value is exceeded, at a predetermined proportion or more within a predetermined period.

When it is determined in step S306 that the electromotive force range exceeds the reference value, the control unit 13 next determines the number of electrodes in which the phenomenon is observed (step S307). When it is determined that the number of electrodes is three, the processing proceeds to step S308, and when it is determined that the number of electrodes is two or one, the processing proceeds to step S309.

In the case in which it is determined that the number of electrodes is three, Determination 2 is made in which a fluctuation in the potential of the reference electrode 107 or occurrence of electrical noise is estimated as a cause of the unstable state (step S308). In the case in which it is determined that the number of electrodes is two or less, Determination 3 is made in which an abnormality in the electrode is estimated as a cause of the unstable state (step S309).

In contrast, when it is determined in step S306 that the electromotive force range is equal to or smaller than the reference value, the control unit 13 next determines whether a slope of the electromotive force fluctuation obtained in a combination of the acquired plurality of periods exceeds a reference value set in advance for determining drift (step S310). The slope of the electromotive force in step S310 can be determined as the slope of an approximate line in which the measurement results in the plurality of periods are arranged.

When it is determined in step S310 that the reference value is exceeded, the control unit 13 next determines the number of electrodes in which the phenomenon is observed and a direction of the slope (step S311).

In the case in which the number of electrodes is three and slopes in the same direction are observed, Determination 4 is made in which a fluctuation in potentials of the reference electrode is estimated as a cause of the unstable state (step S312).

The case in which slopes not in the same directions are observed although the number of electrodes is three, particularly the case in which only the slope of Cl is in a reverse direction is assumed, and in this case, Determination 5 is made in which temperature drift is estimated as a cause of the unstable state (step S313).

In contrast, the case in which slopes in two electrodes are observed, particularly the case in which the two electrodes correspond to K and Cl is assumed, and in this case, Determination 6 is made in which leakage of the reference electrode solution is estimated as a cause of the unstable state (step S314). In the case of only one electrode, Determination 7 is made in which, as in Determination 3, the abnormality in the corresponding ion-selective electrodes 104, 105, and 106 is estimated as a cause of the unstable state (step S315).

In contrast, when it is determined in step S310 that the slope of the electromotive force fluctuation is equal to or smaller than the reference value, the processing proceeds to step S316, and Determination 8 is made in which air bubbles in a flow path are estimated (step S316).

Next, the details of the electromotive force collection and analysis (B) for the internal standard solution in step S213 will be described with reference to FIG. 5. FIG. 5 is a flowchart showing the processing contents of the electromotive force collection and analysis for the internal standard solution in the period B.

The period B shown in FIG. 5 is a relatively long time than the period A, and it is desirable to divide the period in a certain range. Therefore, the determination is performed with information in one period.

The determination procedure is substantially the same as the processing in the period A shown in FIG. 4. Step S402 corresponds to step S302, step S403 corresponds to step S303, step S405 corresponds to step S306, step S406 corresponds to step S307, step S409 corresponds to step S310, step S410 corresponds to step S311, step S404 corresponds to step S304, step S407 corresponds to step S308, step S408 corresponds to step S309, step S411 corresponds to step S312, step S412 corresponds to step S313, step S413 corresponds to step S314, step S414 corresponds to step S315, and step S415 corresponds to step S316, and a step corresponding to step S305 in the flow shown in FIG. 4 is omitted.

The above-described step S302, step S305, and step S402 correspond to a measurement step of measuring a potential in the state in which the ion-selective electrode is filled with the internal standard solution when the sample is dispensed into the second measurement unit or when the sample is measured by the second measurement unit. Step S303, step S304, step S306 to step S316, and step S403 to step S415 correspond to a determination step of determining the presence or absence of an abnormality in the electrolyte measurement unit 11 from the measurement result in the measurement step.

In step S306 of the period A shown in FIG. 4, the determination is made by continuing a plurality of periods in which the reference value is exceeded, whereas in step S405 of the period B shown in FIG. 5, the determination is performed by determining that there are a plurality of ranges in which the reference value is exceeded. The range in the period B is set in advance to a time when the electromotive force points necessary for the determination can be collected, for example, 10 seconds, and the determination is performed based on the electromotive force collected therein.

Further, in Determination 1 to Determination 8 which are the results of the analysis in FIG. 4 or FIG. 5, it is desirable that a recommended maintenance item corresponding to the estimated cause is set in advance.

Although not particularly limited, there is no recommended maintenance because there is no abnormality in Determination 1. In the case of Determination 2, the recommended maintenance is replacement of the reference electrode, replacement of the reference electrode solution, and the check of the crystal deposition in the waste-liquid discharging unit and the sipper syringe, and in the case of Determination 3 or Determination 7, the recommended maintenance is the replacement of the corresponding ion-selective electrodes 104, 105, and 106. In the case of Determination 4, the recommended maintenance is replacement of the reference electrode 107 and replacement of the reference electrode solution, and in the case of Determination 5, the recommended maintenance is temperature stabilization of the device and the environment. In the case of Determination 6, the recommended maintenance is replacement of a suction tube, and in the case of Determination 8, the recommended maintenance is a check of a reagent remaining amount and an electrolyte measurement reagent prime.

Further, in the electrolyte measurement device 100, after the end of the colorimetric analysis of the last sample to which the measurement request is issued (at the end of step S215), an ending operation is performed, and then, the entire electrolyte measurement device 100 is held in a standby state until the next measurement request is issued (step S216) . Even in this standby state, the flow path of the electrolyte measurement device 100 is filled with the internal standard solution.

Therefore, even in the standby state, similarly to step S209 or step S213, it is desirable that the time from the start of the standby state until the next measurement request is issued is divided, for example, every 10 minutes as a period C, and the same electromotive force collection and analysis as in the period B in FIG. 5 are performed.

When the result of one period C is Determination 1, the above-described internal standard solution replacing operation is not performed, and in the cases of Determinations 2 to 8, the replacing operation can be performed only for a case in which the phenomenon is expected to be further improved. In this way, by collecting and analyzing the stable state of the electromotive force in the standby state, operations periodically performed and the number of the operations can be omitted only when necessary because the electromotive force state is not visualized.

According to the electrolyte measurement device, when the pinch valve is opened at this time, the reference electrode solution diffuses to the ion-selective electrodes 104, 105, and 106 side due to the concentration difference with the internal standard solution, and the electromotive force of the ion-selective electrodes 104, 105, and 106 may become unstable. Therefore, processing of replacing the internal standard solution in the flow path is performed in the case in which the measurement is not performed for a certain period of time.

Next, details of the standby electromotive force monitor screen 500 on which the electromotive force collected in step S209 or step S213 is displayed will be described with reference to FIG. 6. FIG. 6 is a diagram showing an example of a screen display of the electromotive force monitor during standby time.

The standby electromotive force monitor screen 500 as shown in FIG. 6 is a screen displayed on the display unit 10a of the computer 10, and the electromotive forces each collected by a respective one of the plurality of ion-selective electrodes 104, 105, and 106 (Na, K, and Cl) are collectively displayed as graphs 501, 502, and 503.

In the graphs 501, 502, and 503 of the respective ion-selective electrodes 104, 105, and 106, a vertical axis represents a magnitude of the electromotive force, and a horizontal axis represents a collection date and time. The periodically collected electromotive forces are collectively displayed for each period in the period A or the period B. This example shows a time point in the period B at which an 11th point is displayed, and it is desirable that the 11th point is displayed in a manner of being distinguishable from the electromotive force data of the period A collected about 30 minutes before.

The user can display this screen at any time, and can visually check the stable state of the standby electromotive force at a current time point and several minutes or several hours before.

For a portion where the analysis in step S208 or step S212 shown in FIG. 3 is completed, separation may be performed with a color or an icon or the like may be added and displayed on this screen such that whether the electromotive force is in a stable state or in an unstable state can be identified at a glance.

In this way, by displaying the electromotive force states at the current time point and in plural of past periods on the standby electromotive force monitor screen 500, it is possible to indicate that the measurement before and after the corresponding period is performed in what kind of electromotive force state.

Then, the user checks a stable state of the electromotive force when starting the measurement of the next new sample group, and thus can determine whether to start the measurement as it is or to perform the measurement after performing the maintenance. When the unstable state is unknown, there is a possibility that a re-measurement of the sample is necessary. Therefore, if it is determined to cope with the measurement before the measurement, an unnecessary re-measurement can be omitted, and as a result, an accurate analysis result can be obtained rapidly.

Next, details of the standby electromotive force monitoring information screen 600 displayed in step S214 will be described in detail with reference to FIG. 7. FIG. 7 is a diagram showing an example of a screen display of an electromotive force monitoring result during standby time.

The standby electromotive force monitoring information screen 600 is a screen displayed, as a result of the collection and analysis in step S209 or step S213, on the display unit 10a of the computer 10 in step S214 shown in FIG. 3.

In the example shown in FIG. 7, a column 602 is a column for displaying the kind of the unstable state, and a column 603 is a column for displaying a combination of electrodes and a name of an electrode for which the unstable state is confirmed. A column 601 is a column that displays a code corresponding to a period in which an unstable state is confirmed, the kind of the instability displayed in the column 602, and the combination of electrodes and the name of an electrode shown in the column 603. A column 604 is a column for displaying a cause estimated from the phenomenon, and a column 605 is a column for displaying maintenance recommended from the cause estimation.

When the period in which the unstable state is detected is the period A, a display for prompting the user to check measurement values of the sample measured before and after the period in which the unstable state is detected can be provided. Further, in the case of the period B, a display for prompting the user to check the standby electromotive force monitor before performing the next measurement request can be provided.

In this way, by displaying the unstable state, the estimated cause, and the recommended maintenance on the standby electromotive force monitoring information screen 600, it is possible to accurately respond to the subsequent user and to further improve reliability of data by responding to the user early without waiting for the periodic maintenance time at a predetermined interval.

In the case in which it is determined that there is no abnormality in the determination in step S209 or step S213, it is desirable to record the result in the storage device 12. The recorded result can be viewed by the user at any timing and can be used to check a state of the electrode or the device.

Next, effects of the present embodiment will be described.

The electrolyte measurement device 100 according to the present embodiment described above includes: the electrolyte measurement unit 11 including the ion-selective electrodes 104, 105, and 106 to be supplied with a sample or an internal standard solution, the reference electrode 107 serving as a reference of a potential, and the voltmeter 129 that measures a potential difference between each of the ion-selective electrodes 104, 105, and 106 and the reference electrode 107; the second measurement unit that performs a measurement of a measurement item different from that of the electrolyte measurement unit 11; the sampling mechanism 5 that performs dispensing of the sample into the electrolyte measurement unit 11 or the second measurement unit; and the control unit 13 that controls an operation of each device. When the sample is dispensed into the second measurement unit by the sampling mechanism 5 or when the sample is measured by the second measurement unit, the control unit 13 measures a potential in a state in which the ion-selective electrodes 104, 105, and 106 are filled with the internal standard solution, and determines presence or absence of an abnormality in the electrolyte measurement unit 11 based on measurement data.

Accordingly, the stability of the electromotive force of the ion-selective electrodes 104, 105, and 106 can be checked during the standby time other than the time of sample measurement, the stable state of the electromotive force is visualized, and the unstable state can be detected early.

The second measurement unit is the photometry mechanism 8, and the control unit 13 measures the potential when the sample is dispensed for analysis with the photometry mechanism 8 by the sampling mechanism 5 or when the sample is measured by the photometry mechanism 8, so that the stability of the electromotive force of the ion-selective electrodes 104, 105, and 106 can be checked even in a device configuration in which a standby time is likely to occur in the electrolyte measurement unit 11.

Furthermore, the control unit 13 can determine the presence or absence of an abnormality in the electrolyte measurement unit 11 with higher accuracy by determining the presence or absence of an abnormality in the electrolyte measurement unit 11 based on the measurement data obtained by measuring the potentials twice or more continuously in a state in which the ion-selective electrodes 104, 105, and 106 are filled with the internal standard solution.

The electrolyte measurement unit 11 includes a plurality of ion-selective electrodes, which are the ion-selective electrodes 104, 105, and 106, and the control unit 13 can perform, by determining an abnormality based on a combination of states of potentials each measured by a respective one of the ion-selective electrodes 104, 105, and 106, determination of the presence or absence of an abnormality in each electrode and the presence or absence of an abnormality in an area other than the electrode with high accuracy in the case in which a plurality of electrodes are present.

Furthermore, the control unit 13 can determine, by identifying the cause of the abnormality based on whether the measured potential is out of the reference range in all the ion-selective electrodes 104, 105, and 106, whether the abnormality is an abnormality in the electrode or an abnormality in an area other than the electrode with high accuracy.

By setting a state of the potential to a slope of the temporal changes of measurement potentials, the control unit 13 can identify an abnormality factor in the electrode particularly by determining the abnormality based on the slope of the temporal changes of the measurement potential when the measurement potentials of all the ion-selective electrodes 104, 105, and 106 are within the reference range.

### Reference Signs List

1: sample disk
2: reagent disk
3: reaction disk
4: reaction tank
5: sampling mechanism (dispensing unit)
6: reagent dispensing mechanism
7: stirring mechanism
8: photometry mechanism (colorimetry measurement unit)
9: cleaning mechanism
10: computer
10a: display unit
11: electrolyte measurement unit (electrolyte concentration measurement unit)
12: storage device
13: control unit
14: piezoelectric element driver
15: stirring mechanism controller
16: sample container
17: circular sample disk
18: reagent bottle
19: circular reagent disk
20: refrigerator
21: reaction container
22: reaction container holder
23: drive mechanism
24: sample probe
25: sample probe supporting shaft
26: sample probe arm
27: reagent probe
28: reagent probe supporting shaft
29: reagent probe arm
31: fixing unit
33: nozzle
34: vertical drive mechanism
100: electrolyte measurement device
101: sample container
103: dilution tank
104, 105, 106: ion-selective electrode
107: reference electrode
108: sipper syringe
109: internal standard solution syringe
110: diluent syringe
111: pinch valve
112: reference electrode two-way solenoid valve
113: sipper syringe aspiration two-way solenoid valve
114: waste liquid discharge two-way solenoid valve
115: internal standard solution discharge two-way solenoid valve
116: internal standard solution aspiration two-way solenoid valve
117: diluent discharge two-way solenoid valve
118: diluent aspiration two-way solenoid valve
119: reference electrode solution bottle
120: internal standard solution bottle
121: diluent bottle
128: signal wiring
129: voltmeter (measurement unit)
500: standby electromotive force monitor screen
501,502, 503: graph
600: standby electromotive force monitoring information screen
601, 602, 603, 604, 605: column

## Claims

1. An electrolyte measurement device (100) comprising:
an electrolyte concentration measurement unit (11) including an ion-selective electrode (104,105,106) to be supplied with a sample or an internal standard solution, a reference electrode (107,108) serving as a reference of a potential, and a measurement unit (129) configured to measure a potential difference between the ion-selective electrode and the reference electrode;
a second measurement unit (8) configured to perform a measurement of a measurement item different from that of the electrolyte concentration measurement unit;
a dispensing unit (5) configured to perform dispensing of the sample into the electrolyte concentration measurement unit or the second measurement unit; and
a control unit configured to control an operation of each device, **characterized in that**
when the sample is dispensed into the second measurement unit by the dispensing unit or when the sample is measured by the second measurement unit, the control unit measures a potential in a state in which the ion-selective electrode is filled with the internal standard solution, and determines presence or absence of an abnormality in the electrolyte concentration measurement unit based on measurement data.

2. The electrolyte measurement device according to claim 1, wherein
the second measurement unit is a colorimetric measurement unit, and
the control unit measures a potential when the sample is dispensed into the colorimetric measurement unit by the dispensing unit or when the sample is measured by the colorimetric measurement unit.

3. The electrolyte measurement device according to claim 1, wherein
the control unit determines the presence or absence of an abnormality in the electrolyte concentration measurement unit based on measurement data obtained by measuring a potential twice or more continuously in a state in which the ion-selective electrode is filled with the internal standard solution.

4. The electrolyte measurement device according to claim 1, wherein
the electrolyte concentration measurement unit includes a plurality of the ion-selective electrodes, and
the control unit determines an abnormality based on a combination of states of potentials each measured by a respective one of the ion-selective electrodes.

5. The electrolyte measurement device according to claim 4, wherein
the control unit identifies a cause of an abnormality based on whether the measured potentials are out of a reference range for all the ion-selective electrodes.

6. The electrolyte measurement device according to claim 5, wherein
a state of the potential is set to a slope of a temporal change of the measurement potential.

7. The electrolyte measurement device according to claim 6, wherein
the control unit determines an abnormality based on the slope of a temporal change of the measurement potential when the measurement potentials of all the ion-selective electrodes are within the reference range.

8. The electrolyte measurement device according to claim 1, further comprising:
a display device (10a) configured to display at least one of the measurement data and a result of the determination of the presence or absence of an abnormality in the electrolyte concentration measurement unit.

9. A method for determining an abnormality in an electrolyte concentration measurement unit (100) in an electrolyte measurement device, the electrolyte measurement device including: the electrolyte concentration measurement unit (11) including an ion-selective electrode (104,105,106) to be supplied with a sample or an internal standard solution, a reference electrode (107,108) serving as a reference of a potential, and a measurement unit (129) configured to measure a potential difference between the ion-selective electrode and the reference electrode; and a second measurement unit configured to perform measurement of a measurement item different from that of the electrolyte concentration measurement unit, **characterized in that** the method comprising:
a measurement step of measuring a potential in a state in which the ion-selective electrode is filled with the internal standard solution when the sample is dispensed into the second measurement unit (8) or when the sample is measured by the second measurement unit; and
a determination step of determining presence or absence of an abnormality in the electrolyte concentration measurement unit based on a measurement result in the measurement step.

## Patentansprüche

1. Elektrolytmessvorrichtung (100) umfassend:
eine Elektrolytkonzentrationsmesseinheit (11), die eine ionenselektive Elektrode (104, 105, 106), die mit einer Probe oder einer internen Standardlösung versorgt werden soll, eine Referenzelektrode (107, 108), die als Referenz eines Potentials dient, und eine Messeinheit (129) umfasst, die dazu konfiguriert ist, eine Potentialdifferenz zwischen der ionenselektiven Elektrode und der Referenzelektrode zu messen;
eine zweite Messeinheit (8), die dazu konfiguriert ist, eine Messung eines Messobjekts durchzuführen, das sich von dem der Elektrolytkonzentrationsmesseinheit unterscheidet;
eine Abgabeeinheit (5), die dazu konfiguriert ist, eine Abgabe der Probe in die Elektrolytkonzentrationsmesseinheit oder die zweite Messeinheit durchzuführen; und
eine Steuereinheit, die dazu konfiguriert ist, einen Betrieb jeder Vorrichtung zu steuern,
**dadurch gekennzeichnet, dass**, wenn die Probe durch die Abgabeeinheit in die zweite Messeinheit abgegeben wird oder wenn die Probe durch die zweite Messeinheit gemessen wird, die Steuereinheit ein Potential in einem Zustand misst, in dem die ionenselektive Elektrode mit der internen Standardlösung gefüllt ist, und das Vorhandensein oder Nichtvorhandensein einer Anomalie in der Elektrolytkonzentrationsmesseinheit basierend auf Messdaten bestimmt.

2. Elektrolytmessvorrichtung nach Anspruch 1, wobei
die zweite Messeinheit eine kolorimetrische Messeinheit ist, und
die Steuereinheit ein Potential misst, wenn die Probe durch die Abgabeeinheit in die kolorimetrische Messeinheit abgegeben wird oder wenn die Probe durch die kolorimetrische Messeinheit gemessen wird.

3. Elektrolytmessvorrichtung nach Anspruch 1, wobei
die Steuereinheit das Vorhandensein oder Nichtvorhandensein einer Anomalie in der Elektrolytkonzentrationsmesseinheit basierend auf Messdaten bestimmt, die durch zwei- oder mehrmaliges kontinuierliches Messen eines Potentials in einem Zustand erhalten werden, in dem die ionenselektive Elektrode mit der internen Standardlösung gefüllt ist.

4. Elektrolytmessvorrichtung nach Anspruch 1, wobei
die Elektrolytkonzentrationsmesseinheit mehrere der ionenselektiven Elektroden umfasst, und
die Steuereinheit eine Anomalie basierend auf einer Kombination von Zuständen von Potentialen bestimmt, die jeweils durch eine entsprechende der ionenselektiven Elektroden gemessen werden.

5. Elektrolytmessvorrichtung nach Anspruch 4, wobei die Steuereinheit eine Ursache einer Anomalie basierend darauf identifiziert, ob die gemessenen Potentiale außerhalb eines Referenzbereichs für alle ionenselektiven Elektroden liegen.

6. Elektrolytmessvorrichtung nach Anspruch 5, wobei ein Zustand des Potentials auf eine Steigung einer zeitlichen Änderung des Messpotentials eingestellt ist.

7. Elektrolytmessvorrichtung nach Anspruch 6, wobei die Steuereinheit eine Anomalie basierend auf der Steigung einer zeitlichen Änderung des Messpotentials bestimmt, wenn die Messpotentiale aller ionenselektiven Elektroden innerhalb des Referenzbereichs liegen.

8. Elektrolytmessvorrichtung nach Anspruch 1, weiter umfassend:
eine Anzeigevorrichtung (10a), die dazu konfiguriert ist, die Messdaten und/oder ein Ergebnis der Bestimmung des Vorhandenseins oder Nichtvorhandenseins einer Anomalie in der Elektrolytkonzentrationsmesseinheit anzuzeigen.

9. Verfahren zur Bestimmung einer Anomalie in einer Elektrolytkonzentrationsmesseinheit (100) in einer Elektrolytmessvorrichtung, wobei die Elektrolytmessvorrichtung umfasst:
die Elektrolytkonzentrationsmesseinheit (11), die eine ionenselektive Elektrode (104, 105, 106), die mit einer Probe oder einer internen Standardlösung versorgt werden soll, eine Referenzelektrode (107, 108), die als Referenz eines Potentials dient, und eine Messeinheit (129) umfasst, die dazu konfiguriert ist, eine Potentialdifferenz zwischen der ionenselektiven Elektrode und der Referenzelektrode zu messen; und
eine zweite Messeinheit, die dazu konfiguriert ist, eine Messung eines Messobjekts durchzuführen, das sich von dem der Elektrolytkonzentrationsmesseinheit unterscheidet,
**dadurch gekennzeichnet, dass** das Verfahren umfasst:
einen Messschritt zum Messen eines Potentials in einem Zustand, in dem die ionenselektive Elektrode mit der internen Standardlösung gefüllt ist, wenn die Probe in die zweite Messeinheit (8) abgegeben wird oder wenn die Probe durch die zweite Messeinheit gemessen wird; und
einen Bestimmungsschritt zum Bestimmen des Vorhandenseins oder Nichtvorhandenseins einer Anomalie in der Elektrolytkonzentrationsmesseinheit basierend auf einem Messergebnis im Messschritt.

## Revendications

1. Dispositif (100) de mesure d'électrolyte comprenant :
une unité (11) de mesure de concentration d'électrolyte incluant une électrode (104, 105, 106) sélective d'ions destinée à recevoir un échantillon ou une solution standard interne, une électrode (107, 108) de référence servant comme une référence d'un potentiel, et une unité (129) de mesure configurée pour mesurer une différence de potentiel entre l'électrode sélective d'ions et l'électrode de référence ;
une deuxième unité (8) de mesure configurée pour effectuer une mesure d'un élément de mesure différent de celui de l'unité de mesure de concentration d'électrolyte ;
une unité (5) de distribution configurée pour effectuer une distribution de l'échantillon dans l'unité de mesure de concentration d'électrolyte ou la deuxième unité de mesure ; et
une unité de commande configurée pour commander un fonctionnement de chaque dispositif, **caractérisé en ce que**
lorsque l'échantillon est distribué dans la deuxième unité de mesure par l'unité de distribution ou lorsque l'échantillon est mesuré par la deuxième unité de mesure, l'unité de commande mesure un potentiel dans un état dans lequel l'électrode sélective d'ions est pleine de la solution standard interne, et détermine la présence ou l'absence d'une anomalie dans l'unité de mesure de concentration d'électrolyte sur la base de données de mesure.

2. Dispositif de mesure d'électrolyte selon la revendication 1, dans lequel
la deuxième unité de mesure est une unité de mesure colorimétrique, et
l'unité de commande mesure un potentiel lorsque l'échantillon est distribué dans l'unité de mesure colorimétrique par l'unité de distribution ou lorsque l'échantillon est mesuré par l'unité de mesure colorimétrique.

3. Dispositif de mesure d'électrolyte selon la revendication 1, dans lequel
l'unité de commande détermine la présence ou l'absence d'une anomalie dans l'unité de mesure de concentration d'électrolyte sur la base de données de mesure obtenues en mesurant un potentiel deux fois ou de façon plus continue dans un état dans lequel l'électrode sélective d'ions est pleine de la solution standard interne.

4. Dispositif de mesure d'électrolyte selon la revendication 1, dans lequel
l'unité de mesure de concentration d'électrolyte inclut une pluralité des électrodes sélectives d'ions, et
l'unité de commande détermine une anomalie sur la base d'une combinaison d'états de potentiels mesurés chacun par une respective des électrodes sélectives d'ions.

5. Dispositif de mesure d'électrolyte selon la revendication 4, dans lequel
l'unité de commande identifie une cause d'une anomalie sur la base que les potentiels mesurés sont ou non hors d'une plage de référence pour toutes les électrodes sélectives d'ions.

6. Dispositif de mesure d'électrolyte selon la revendication 5, dans lequel
un état du potentiel est fixé sur une pente d'un changement temporel du potentiel mesuré.

7. Dispositif de mesure d'électrolyte selon la revendication 6, dans lequel
l'unité de commande détermine une anomalie sur la base de la pente d'un changement temporel du potentiel mesuré lorsque les potentiels de mesure de toutes les électrodes sélectives d'ions sont à l'intérieur de la plage de référence.

8. Dispositif de mesure d'électrolyte selon la revendication 1, comprenant en outre :
un dispositif (10a) d'affichage configuré pour afficher au moins un(e) parmi les données de mesure et un résultat de la détermination de la présence ou de l'absence d'une anomalie dans l'unité de mesure de concentration d'électrolyte.

9. Procédé pour déterminer une anomalie dans une unité (100) de mesure de concentration d'électrolyte dans un dispositif de mesure d'électrolyte, le dispositif de mesure d'électrolyte incluant :
l'unité (11) de mesure de concentration d'électrolyte incluant une électrode (104, 105, 106) sélective d'ions destinée à recevoir un échantillon ou une solution standard interne, une électrode (107, 108) de référence servant comme une référence d'un potentiel, et une unité (129) de mesure configurée pour mesurer une différence de potentiel entre l'électrode sélective d'ions et l'électrode de référence ; et une deuxième unité de mesure configurée pour effectuer une mesure d'un élément de mesure différent de celui de l'unité de mesure de concentration d'électrolyte, **caractérisé en ce que** le procédé comprenant :
une étape de mesure pour mesurer un potentiel dans un état dans lequel l'électrode sélective d'ions est pleine de la solution standard interne lorsque l'échantillon est distribué dans la deuxième unité (8) de mesure ou lorsque l'échantillon est mesuré par la deuxième unité de mesure ; et
une étape de détermination pour déterminer la présence ou l'absence d'une anomalie dans l'unité de mesure de concentration d'électrolyte sur la base d'un résultat de mesure à l'étape de mesure.
